# EUROPEAN PATENT SPECIFICATION

(11) **EP 4 103 016 B1**
(45) Date of publication and mention of the grant of the patent: **10.12.2025**
(21) Application number: 21710051.0
(22) Date of filing: 10.02.2021
(51) Int. Cl.: A47B 96/06, F16B 12/26, F16B 12/14

(54) **FASTENING ELEMENT FOR A SHELF**
BEFESTIGUNGSELEMENT FÜR EIN REGAL
ÉLÉMENT DE FIXATION POUR UNE ÉTAGÈRE

(30) Priority: 11.02.2020 IT 202000002677
(43) Date of publication of application: 21.12.2022
(73) Proprietor: Bortoluzzi Sistemi S.p.A., 32100 Belluno (IT)
(72) Inventor: SPONGA, Bruno, 32100 Belluno (IT)
(74) Representative: Citron, Massimiliano
(86) International application number: PCT/IB2021/051058
(87) International publication number: WO 2021/161175

(56) References cited:
- EP-A2- 0 681 109
- EP-A2- 2 886 012
- WO-A1-98/22721
- DE-U1- 29 814 399
- FR-A5- 2 205 964
- US-A1- 2019 040 892

## Description

The invention relates to a fastening system for shelves of furniture items or shelving units, and to the components of the system. The invention also relates to an element for fastening a shelf which is blockable on the inner surface of a compartment of a furniture item. By *shelf* it is also meant a tray, a container, a drawer, or a board.

It is known that furniture items or cabinets are furnished with shelves that are often not horizontally sliding and removable, i.e. the shelf is fixed to the furniture walls. For reasons of economy and assembly ease, the fixing is made between a pin protruding from the wall and a corresponding vertical recess in the shelf.

Clearly the biggest disadvantage is that the shelf can be lifted accidentally, as only its weight binds it to the furniture item.

US 2019/040892 A1, EP 2 886 012 A2 , EP 0 681 109 A2 , DE 298 14 399 U1 and FR 2 205 964 A2 disclose fastening systems for furniture parts.

Improving this state of the art is the primary object of the invention, which is defined in the appended claims, wherein the dependent claims define advantageous variants.

A fastening element is proposed for fastening a shelf blockable on the inner surface of a compartment of a furniture item, wherein a lateral surface of the shelf has a, vertical in use, cavity comprising:
an opening facing - in use - downwards,
a lower abutment at the downward-facing opening;
and the fastening element comprises:
   a flexible element that extends cantilevered and is equipped at the free end with a stopping tooth,
   the fastening element being configured to be insertable (in use, vertically) into the cavity through said downward-facing opening so that the tooth engages, e.g. by snapping, said abutment.

In a preferred variant, the fastening element is fixed to the furniture item to receive the shelf, in particular it is fixed to the inner surface of the compartment.

Another aspect of the invention relates to a system (or kit of components) comprising a shelf blockable on the inner surface of a compartment of a furniture item, and a said fastening element.

Another aspect of the invention relates to an assembly method for a said shelf and a said fastening element, wherein the fastening element is inserted (in use, vertically) into the cavity through said downward-facing opening by positioning the tooth so that it engages by snapping said abutment. The insertion of the fastening element into the cavity is a relative movement, and may be accomplished by moving only one of the two while the other remains stationary.

By these aspects of the invention cooperation between the stopping tooth and the abutment prevents the shelf from accidentally lifting off the support member.

In addition, the shelf is simple to produce, and quick and easy to assemble inside the compartment.

For a shelf having a lateral opening delimited by edges, in particular substantially vertical and/or converging edges, the fastening element according to the invention comprises at the sides
first lateral edges substantially complementary to the edges of the lateral opening, and
second lateral edges having a greater width than the first edges to form a step between the first and second edges.

Below are some preferred variants for these aspects of the invention, that can be exploited alone or in combination with each other.

In particular, the fastening element may also comprise components with a support function for supporting the shelf.

In this way the first edges can be positioned between said edges of the lateral opening and the second edges can be positioned within the cavity behind said edges of the lateral opening in order to remain retained, by opposition of parts, thereby avoiding a lateral slipping out.

The fastening element comprises a - in use, upper - portion which in one variation comprises
- a through-hole for fastening, e.g. by a screw, to the compartment, and/or
- a, e.g. convex and/or at least semi-circular, margin comprising a first edge and a second edge, the second edge having a width greater than the first edge to form a step between the first and second edge, wherein said step of the upper portion is configured to abut the profile of the cavity.

This step may act to hold and/or support the shelf when the upper portion abuts the cavity profile in the shelf.

The fastening element comprises in a variant a - in use, upper - portion provided with a concave, e.g., at least semi-circular, margin comprising a first edge and a second edge, the second edge having a width greater than the first edge to form a step between the first and second edge, and
an auxiliary element for supporting the shelf which
is fixable to the compartment,
comprises a step complementary to that of the upper portion, and is couplable to the upper portion by shape-coupling between the respective steps.

In general, the first and second edge may be present in one and the same indivisible part of the fastening element or on separate parts that may be connected to each other during assembly. In a variant, the first and second edge is present in the upper portion and/or on a different part of the fastening element. Or, the upper portion is comprised in an auxiliary element comprising said first and second edge, and which is couplable to the fastening element to give it a support function. In particular, the first and second edge may be comprised on a washer or a fastening member used to secure the fastening element to the compartment. The fastening member is preferably a screw, and/or preferably mounted in said through-hole.

The upper portion may be a part that is bored in the center and provided with a, e.g. at least semi-circular and/or convex, margin comprising the first and second edge. Or, the upper portion may be a part devoid of hole and equipped with a concave, e.g. at least semi-circular (to receive e.g. a stem and head of a screw), margin comprising the first and second edge.

Preferably, the step formed by said first and second edges and the step formed by said first and second edge are one the continuation of the other.

The vertical cavity may be open upward or blind upward.

Said edges of the cavity preferably taper upwardly, to create wedging between the first edges and those of the cavity; and correspondingly the first edges are not parallel but converging to align with those of the cavity.

Said upper portion may abut against the ceiling of the vertical cavity, providing additional support.

In these configurations, it is always ensured that the fastening element remains retained by the edges of the lateral opening and/or that it supports the shelf.

Said lower abutment may be, for example, an edge of the vertical cavity, for structural simplicity, or the cavity itself comprises in turn a recess whose edge forms said abutment.

In particular, said abutment and/or said edge of the cavity or of the recess are horizontal.

The fastening element preferably comprises two parallel, spaced apart segments,
the flexible element being placed between the two segments, projecting cantilevered from them and parallel to them,
each parallel segment having an outermost edge on which there are edges as said first and second edges.

In particular, the flexible element extends cantilevered from the upper portion or extends cantilevered from a body comprising said first and second edges.

In a variant, the flexible element lies within a plane orthogonal to the axis of the through-hole (if any). In particular, the tooth extends parallel to the axis of the through-hole (if any).

To maximize mechanical tightness, the flexible element - in use - extends vertically from the upper portion, and said edge of the cavity or recess extends horizontally.

The fastening member, or said body, preferably comprises two parallel and spaced apart segments, the flexible member being placed between the two segments and being parallel thereto.

The two parallel segments in a variant extend from the upper portion, or in another variant are comprised in said body.

The outer edges of said parallel segments and/or of the upper portion may be configured as said first and second edges.

The first and second edges form a perimetral step. When the first and second edges are present in the upper portion, the perimetral step preferably extends along an arc of at least 90 degrees, preferably 180 degrees, about the axis of the through-hole (if any) or about an imaginary axis.

The second edges define a peripheral or perimetral lip that has a width greater than that of the cavity's profile and is useful for retaining and/or supporting the shelf. Preferably the peripheral or perimetral lip lies on a plane from which the stopping tooth protrudes. Preferably the cavity comprises a complementary undercut to receive the perimetral lip.

In particular, to make said perimetral step, a portion or said body of the fastening element has two cross-sections which, viewed in respective planes being parallel to each other, offset and orthogonal to the axis of the through-hole (if any), have different widths.

Preferably, the fastening member comprises a flat member that is integral with the end of the two parallel segments that is opposite the upper portion (if any), the flat member extending in a plane substantially parallel to the axis of the through-hole (if any). Otherwise, the flat element integral with the end of the two parallel segments extends within a plane substantially orthogonal to the axis of the length of the parallel segments. The flat element may have a supporting and/or plugging function for the cavity in the shelf.

Preferably, the flexible element is equipped, for example at the free end thereof, with a second tooth that extends in the opposite direction to the upper portion. The second tooth facilitates release of the stopping tooth if, for example, it is pushed by a tool.

The vertical cavity in the shelf may be made directly on the side of a metal shelf or with metal sides, especially in the case where there is a metal or plastic profile on the side of the shelf. It is more difficult to make the vertical cavity directly on the side of a wooden shelf, therefore a variant envisages that said vertical cavity is comprised in an insert applied to the side of the shelf. In particular, the insert comprises and/or forms a vertical cavity as defined above, in particular open downwardly and laterally, blind upwardly, and comprising said lower abutment. In particular, the insert comprises one or each variant mentioned above for the vertical cavity. In particular, the insert may comprise a body bounding the vertical cavity and a threaded pin which extends projecting from the body in a direction orthogonal to the vertical length of the cavity.

The fastening element can be manufactured from plastic, wood or by bending a sheet of metal.

The advantages of the invention will be even clearer from the following description of a preferred example of the system, reference being made to the attached drawing in which
- Fig. 1 shows a three-dimensional view of a fastening element for shelf;
- Fig. 2 shows a different three-dimensional view of the fastening element in Fig. 1;
- Fig. 3 shows a front view of the fastening element in Fig. 1;
- Fig. 4 shows a vertical cross-sectional view of the fastening element in Fig. 1 according to the IV-IV plane;
- Fig. 5 shows a three-dimensional view for a variant of the fastening element in Fig. 1;
- Figs. 6, 7a, 7b, 8a, 8b, 9a, 9b show a mounting sequence for the fastening element in Fig. 1; the pairs of Figs. 7a-7b, 8a-8b, 9a-9b show the same mounting configuration in different views: perspective views for suffix "a" and cross-sectional for suffix "b";
- Fig. 10 shows a three-dimensional view of a shelf insert;
- Fig. 11 shows a different three-dimensional view of the insert in Fig. 10;
- Fig. 12 shows a three-dimensional view of a variant for shelf insert;
- Figs. 13-15 show a mounting sequence for the fastening element in Figs. 10 and 12;
- Figs. 16 and 17 show a three-dimensional view for a variant of the fastening element in Fig. 1;
- Fig. 18 shows a vertical cross-sectional view of the fastening element in Fig. 16 and a shelf, assembled.
- Figs. 19, 20, and 21 show a three-dimensional view for a variant of the fastening element in Fig. 1;
- Fig. 22 shows a vertical cross-sectional view of the fastening element in Fig. 19 and a shelf, assembled.

In the figures equal numbers indicate equal or conceptually similar parts, and elements are described as in use. Equal or substantially equal parts in different variants are indicated by adding a digit of the hundreds.

In order not to crowd the figures some numerical references are omitted.

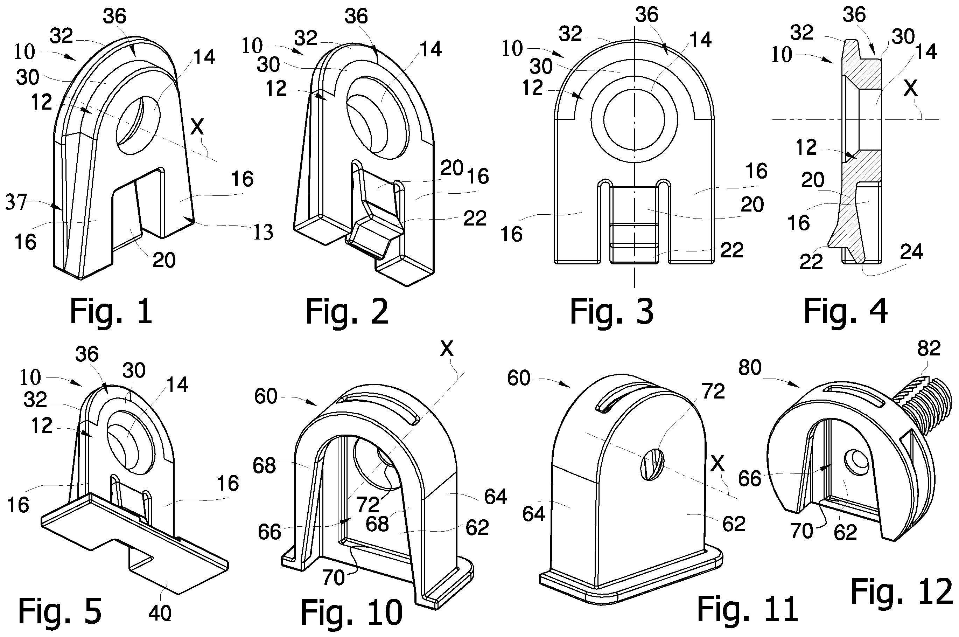

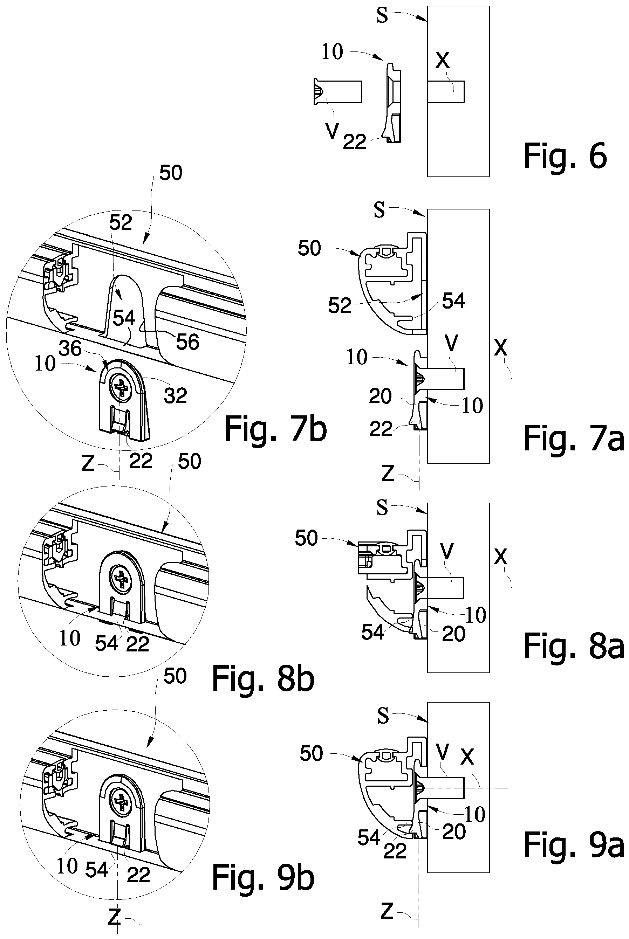

A system (or kit of components) for fastening a shelf M to the inner surface S (Figs. 6 to 9b, 13÷15, 18 and 22) of a cabinet compartment (not shown) comprises the shelf M and a fastening and support element 10 (Fig. 1).

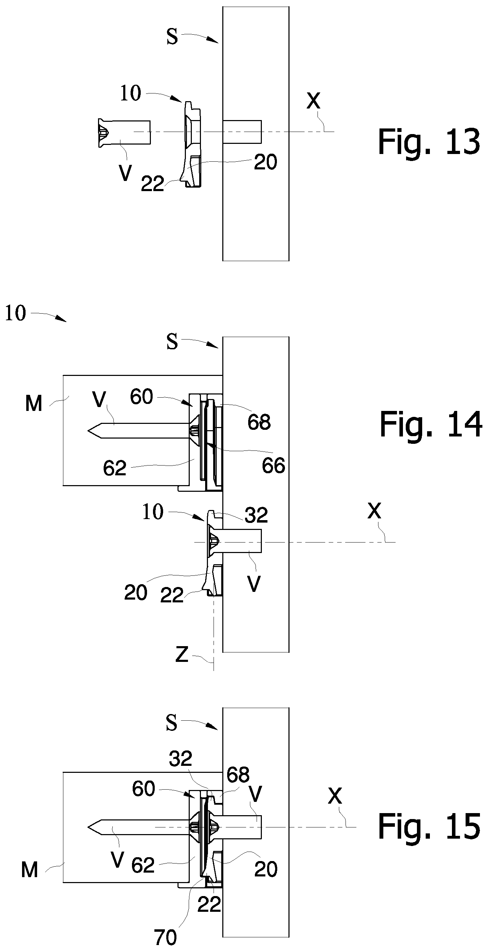

The element 10 comprises an upper portion 12 provided with a through-hole 14, having an X-axis, for a screw V or equivalent fixing means to the surface S (see Fig. 6 or 13).

The upper portion 12 joins to a lower portion 13 comprising two parallel and spaced apart segments or legs 16, between which is placed a flexible member 20 that is parallel to the segments 16.

The flexible member 20 extends cantilevered from the upper portion 12 and is provided at the free end with a stopping tooth 22 that projects parallel to the X-axis of the hole 14 relative to the segments 16.

The upper portion 12 preferably comprises two parts 30, 32 having cross-sections, viewed in respective planes parallel to each other and orthogonal to the axis X, which have different widths. The part 30 has a narrower cross-section than the part 32, so that between the parts 30, 32 there remains defined a perimetral step 36 extending along an arc of about 180 degrees about the X axis. The portion 32 thus defines in the upper portion 12 a peripheral lip. The shape or plan of the portion 12 may also differ from that illustrated.

Preferably, the lower portion 13 also comprises two parts having cross-sections, viewed in respective planes parallel to each other and orthogonal to the X axis, which have different widths, so that the two parts define a peripheral step 37 (Fig. 1).

The element 10 in a variant may comprise an (optional) flat element 40, see Fig. 5. The element 40 is integral with the end of the segments 16 that is opposite the upper portion 12, and the element 40 extends in a plane substantially parallel to the X axis. The element 40 is useful as a projecting support edge for the shelf M, i.e. the shelf M, once mounted, is supported (also) by the element 40. The element 40 is also useful as a plug for the cavity in the shelf M.

The flexible element 20 is provided at the free end with a second (optional) tooth 24 that extends in the opposite direction with respect the upper portion 12.

The shelf M of Figs. 6÷9b is typically made of wood or metal, and comprises a metal or plastic perimeter profile 50 on the side surface of which a cavity or vertical groove 52 is formed. The cavity 52 is open downwardly and laterally, and is blind upwardly. In particular, the lateral opening of the cavity 52 defines a lateral profile 56 (Fig. 7b) bounded by the edges of the cavity 52. In the illustrated example, the lateral profile 56 is shaped like an inverted U, V or Ω. The vertical cavity or groove 52 e.g. may also be formed as a recess or milling in a wooden or plastic or metal shelf.

The profile 50 comprises a bottom abutment 54, obtained, for example, as an edge of the cavity 52 and/or the profile 56, located, for example, at the downward-facing opening of the cavity 52.

Then, by construction, in the portions 12, 13 there remain defined first lateral margins substantially complementary to the margins of the profile 56 and second margins having a width greater than the first margins.

The element 10, particularly the portion 12 and the segments 16, has a shape complementary to the cavity 52, so that it can be inserted vertically into the cavity 52 (Figs. 7 and 8a, 8b) along a Z axis which is vertical and orthogonal to the X axis. After insertion (see Figs. 8a and 8b), the lateral profile 56 abuts against - and retains - the perimetral step 36, so the part 32 opposes to an accidental detachment in the horizontal direction (i.e. along X) of the profile 50 from the surface S. The part 30 can optionally support the profile 50 or the shelf M.

After the above-mentioned insertion is completed (Figs. 9a and 9b), the flexible element 20 has moved in the proximity of the entrance of the cavity 42, and the tooth 22 snapped over the abutment 54 in order to remain resting on it from above. In this way, the tooth 22 opposes an upward movement (along the Z axis) of the profile 50 and prevents detachment thereof from the element 10.

The second tooth 24 makes it easier to unlock the profile 50 from the element 10, because it makes the element 20 more accessible, for example by using a screwdriver from below.

Briefly, the fixing sequence can be summarized as follows.
1) the element 10 is mounted on the surface S using a screw V, fig. 6;
2) the profile 50 is moved near the surface S by vertically aligning the cavity 52 with the part 32 (fig. 7a and 7b);
3) the cavity 52 is lowered along the Z axis onto the element 10 by inserting the part 32 into the cavity 52 behind the edges 68; the element 20 flexes backward (toward the surface S) during insertion (Figs. 8a and 8b);
4) when the element 10 is at the end-stop position inside the cavity 52, the edges 68 are abutting against the part 30 and the part 32 is behind the edges 68. The tooth 22 now overlaps the abutment 54 and prevents a backward movement of the profile 50, so that the profile 50 and the element 10 are bound together. Note that the element 10 prevents the shelf M or profile 50 from being lifted off accidentally.

If the shelf M, or the profile 50, of Figs. 6÷9a,b is partially or totally made of wood, it may be difficult to implement the cavity 52 in the wood and/or make it resilient. It is then preferable to implement the cavity 52 in a separate insert, and then couple it to the shelf.

An example of a separate insert is shown in figs. 10÷11.

The insert 60 delimits and/or forms a cavity 66 that - in use - develops vertically and is open downwardly and laterally, and is blind upwardly. The cavity 66 is functionally equivalent to the cavity 52.

For this purpose, the insert 60 has a box-like structure formed by a substantially flat wall 62, which closes and constitutes the bottom of the cavity 66, and by a perimetral wall 64 which rises from the margins of the wall 62 orthogonally thereto. The wall 64 has a plan having a shape of substantially a U, V or Ω, wherein the distance between the two ends of the U or V or Ω defines the width of the entrance of the cavity 66.

The wall 62 is provided with a through-hole 14, having an X-axis, for a screw V or equivalent fastening means to the surface S.

Edges 68 cantilever out from the wall 64 remaining in a plane parallel to the wall 62 and converging toward the center of the U or V or Ω, i.e. toward the X axis, so as to narrow the cross-section of the cavity 66 in a direction orthogonal to the wall 62, i.e. in the direction of the X axis,

The edges 68 form a lateral profile like the profile 56.

Besides, the insert 60 also comprises a lower abutment 70, equivalent to the abutment 54, made by means of a step determined by a recess present in the wall 62.

In the variant of Figs. 10-11, the wall 62 comprises a through-hole 72 for fixing by screw or equivalent means to the side of the shelf.

The type of fastener used to fix the insert 60 to the surface S may vary. A variant of fastening is illustrated with the insert 80 in Fig. 12. This time instead of the hole 72 the wall 62 comprises a pin 82, which may be threaded or a herringbone expansion pin. The expansion is accomplished, for example, by means of a screw or a steel pin, inserted into the central hole. The pin 82 extends protruding from the wall 62 in a direction orthogonal to the wall 62 from the opposite side of the cavity 66 which is structurally the same as the cavity of the element 60. By means of the pin 82, the insert 80 can be directly fixed by interference or screwed into a seat obtained in the side of the shelf. To facilitate screwing or inserting, the walls 62, 64 now have a circular outer perimeter.

The cooperation between the insert 60, 80 and the element 10 is the same as described for the figures 6, 7a, 7b, 8a, 8b, 9a, 9b. The only difference is that the tooth 22 now rests on the abutment or step 70 (Figs. 13÷15).

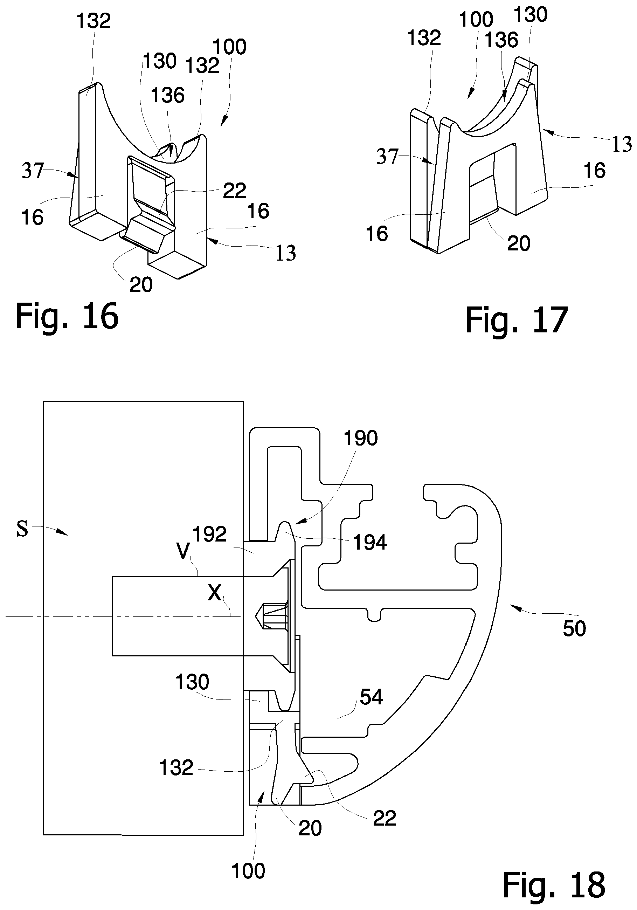

Figs. 16÷18 show a variant of fastening element 100, usable for example for an aluminum or wooden shelf, structurally the same as fig. 1 except that here the upper portion 12 is absent while the portion 13 is substantially unchanged.

The upper portion 12 is replaced by a semicircular recess composed of two edges or parts 130, 132 having cross-sections, viewed in respective planes parallel to each other, which have different widths. The part 130 has a more outwardly-projecting cross-section than the part 132, so that between the parts 130, 132 there remains defined a perimetral step 136 which extends along an arc of about 150÷180 degrees around an axis (corresponding to the axis X in fig. 1).

The perimetral step 36 of Fig. 1 is formed here by means of a washer 190 coupled to the compartment (see also washer 290). In particular, for this purpose the washer 190 comprises a bushing 192 and an edge 194 radially projecting from the bushing 192.

After assembly part of the washer 190 (fig. 18) may rest and fit together on the semicircular recess of the element 100. The perimetral step 136 formed by the parts 130, 132 is complementary to the step between the bushing 192 and the edge 194.

In Fig. 18, it can be seen that the screw V supports the washer 190 inserted in the cavity 52. The washer 190 ends behind the edges 68, and supports and/or holds the shelf M or profile 50.

The element 100 is to be inserted under the washer 190 and into the cavity 52 to close the entrance of the cavity 52. In doing so, the element 20 elastically moves over the abutment 54 (as in fig. 9a and 9b) and keeps the element 100 in place, which works to hold the shelf M or profile 50 in place preventing the shelf M or profile 50 from being lifted out accidentally.

Preferably, in this configuration also the step 37 cooperates with the profile 56 to hold the shelf M or the profile 50 preventing the shelf M or the profile 50 from being accidentally lifted again.

The element 100 may also be used in combination with the variant in Fig. 10 or 12.

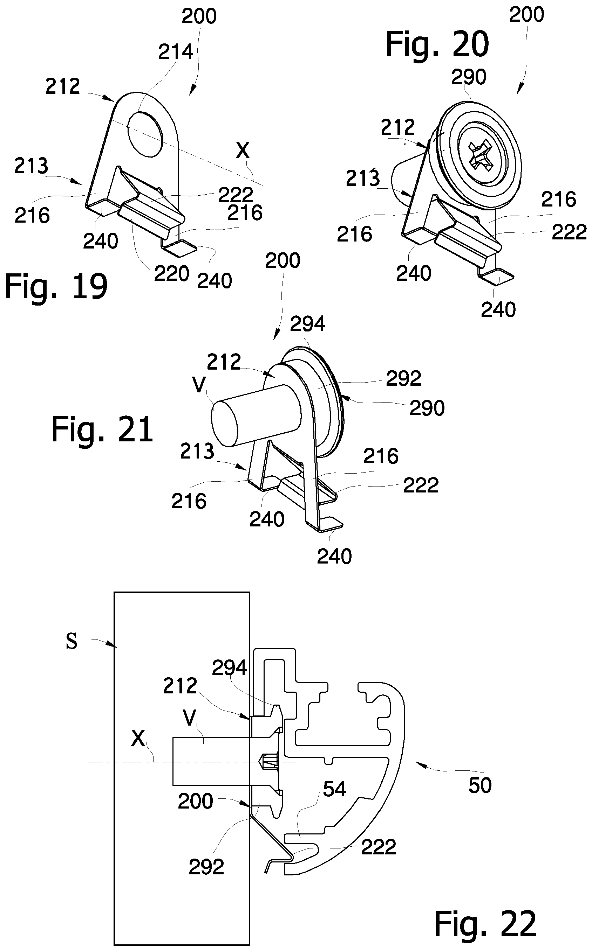

Figs. 19÷22 show a variant of supporting element 200 that can be used, for example, for an aluminum or wooden shelf.

Compared to the variant in Fig. 1, the element 200 is essentially flat and made, for example, of sheet metal.

The upper portion 212 is flat and provided with a through-hole 214, having an X-axis, for a washer 290 supported by a screw V or equivalent fastening means to the surface S (see Fig. 20).

The lower portion 213 comprises two segments or legs 216, which are flat, parallel and spaced apart, between which is placed or formed a flexible member 220 that is parallel to the segments 216.

The flexible member 220 extends cantilevered from the upper portion 212 and is bent to form a stopping tooth 222 that protrudes parallel to the X-axis of the hole 214 relative to the segments 216.

The perimetral step 36 of Fig. 1 is formed here by means of the washer 290 coupled to the hole 214. In particular, for this purpose the washer 290 comprises a bushing 292 and an edge 294 radially projecting from the bushing 292.

The support element 200 in a variant may comprise an (optional) flat element 240 that is integral with the end of the segments 216 and extends in a plane substantially parallel to the axis X. The element 240 may serve as a projecting support edge for the shelf M, i.e. the shelf M, once mounted, is also supported by the element 240. Or the two lateral elements 240 may have the sole purpose of a covering "casing".

The two segments or legs 216 also have a covering function, as do the corresponding segments 13 of the shelf-support 10. However, the main supporting function is performed by the washer 290.

The fixing sequence for the element 200 can be summarized as follows.
1) the element 200 is mounted on the surface S using the screw V + the washer 190 or 290 (fig. 22);
2) the profile 50 is moved closer to the surface S by vertically aligning the cavity 52 with the screw V;
3) the cavity 52 is lowered onto the element 210 by inserting the screw V into the cavity 52 behind the edges 68; the element 220 flexes backward (toward the surface S) during the insertion;
4) when the element 200 is at the end-stop position within the cavity 52, the upper convex edges 68 are abutting against the outer edges of the upper portion 192, 292 and the outer edges of the segments 216. The element 220 elastically returns to its original position by bringing itself on the abutment 54, with a function analogous to Figs. 9a and 9b. Equivalent function is obtained when the shelf is made of wood and the same is prepared with the insert in fig. 10 or 12

The washer 190, 290 and the screw V may be replaced by a screw with a sufficiently large head.

## Claims

1. Fastening element (10; 100; 200) for fastening a shelf (M) to the internal surface of a compartment of a furniture item,
wherein a lateral surface of the shelf is equipped with a cavity (52) which is - in use - vertical and comprises:
a downward-facing opening, and
a lower abutment (54) at the downward-facing opening;
the fastening element comprising:
a flexible element (20) extending cantilevered and being equipped, at the free
end thereof, with a stopping tooth (22),
the fastening element being configured to be insertable inside the cavity through said downward-facing opening so that the stopping tooth (22) engages said abutment (54) to prevent a lifting of the shelf with respect to said internal surface,
**characterized by comprising**
at its sides
first lateral edges (30) substantially complementary to the edges of said lateral opening of the shelf and
second lateral edges (32) having a width greater than the first edges to form a peripheral step (37) between the first and second edges.

2. Fastening element according to claim 1, comprising a portion being - in use - the upper one and equipped with a pass-through hole (14) for the fixing to the compartment.

3. Fastening element according to claim 2, wherein the upper portion comprises a margin comprising a first edge (30) and a second edge (32), the second edge having a
width greater than the first edge to form a step (36) between the first and second edge,
wherein said step (36) of the upper portion is configured to abut against the profile of the cavity of the shelf.

4. Fastening element (100) according to claim 1, comprising
a portion being - in use - the upper one and with a concave margin comprising a first edge (132) and a second edge (130), the second edge having a width greater than the first edge to form a step (136) between the first and second edge, and
an auxiliary support element (190) for the shelf which
is fixable to the compartment,
comprises a step (192, 194) complementary to that of the upper portion and
is couplable to the upper portion by shape-coupling between the respective steps.

5. Fastening element according to claim 3 or 4, comprising two parallel and spaced segments (16),
the flexible element being placed between the two segments, protruding from them and being parallel to them,
each parallel segment having an outermost edge on which there are said first and second edges.

6. Fastening element according to claim 3 or 4 or 5, wherein the first and second edges form the peripheral step (37) for the fastening element, the peripheral step lying in a plane from which the stopping tooth protrudes.

7. Fastening element according to claim 3 or 4 or 5 or 6, wherein the second edges define a peripheral or perimetral lip that has a width greater than that of the cavity's profile.

8. Fastening element according to claim 7, wherein the peripheral or perimetral lip lies on a plane from which the stopping tooth (22) protrudes.

9. Fastening element according to any of claims 2 to 8, comprising two cross-sections which, viewed in respective parallel and offset planes, have different widths, the opposite edges of one cross-section integrating the first edges and the opposite edges of the other cross-section integrating the second edges.

10. Fastening element according to claim 5, comprising a flat member (240) that is integral with the end of the two parallel segments that is opposite the upper portion, the flat member extending in a plane substantially parallel to the axis of the through-hole.

11. Fastening element according to claim 5, comprising a flat member that is integral with the end of the two parallel segments and extends within a plane substantially orthogonal to the axis of the length of the parallel segments.

12. Fastening element according to any of the previous claims, wherein the flexible element is equipped with a second tooth (24) that extends in the opposite direction to the upper portion and adapted to facilitate release of the stopping tooth (22).

13. Kit of components comprising
- a shelf blockable on the inner surface of a compartment of a furniture item, wherein a lateral surface of the shelf is equipped with a cavity (52) which
is - in use - vertical, and
comprises:
a downward-facing opening, and
a lower abutment (54) at the downward-facing opening; and
- a fastening element according to any one of the previous claims

14. Assembly method for a shelf and a fastening element as in one of the preceding claims, wherein the fastening element is inserted inside the cavity through said downward-facing opening positioning the stopping tooth so that it engages with snapping action said abutment.

## Patentansprüche

1. Befestigungselement (10; 100; 200) zum Befestigen eines Regalbodens (M) an der Innenfläche eines Fachs eines Möbelstücks, wobei eine Seitenfläche des Regalbodens mit einer Aussparung (52) versehen ist, die im Gebrauch vertikal ist und Folgendes umfasst:
eine nach unten gerichtete Öffnung und ein unteres Widerlager (54) an der nach unten gerichteten Öffnung;
wobei das Befestigungselement umfasst:
ein flexibles Element (20), das sich freitragend erstreckt und an seinem freien Ende mit einem Anschlagzahn (22) versehen ist,
wobei das Befestigungselement so konfiguriert ist, dass es durch die nach unten gerichtete Öffnung in den Hohlraum eingeführt werden kann, sodass der Anschlagzahn (22) in das Widerlager (54) eingreift, um ein Anheben des Regalbodens in Bezug auf die Innenfläche zu verhindern,
**gekennzeichnet durch** an seinen Seiten erste Seitenkanten (30), die im Wesentlichen komplementär zu den Kanten der seitlichen Öffnung des Regalbodens sind, und
zweite Seitenkanten (32) aufweist, die eine größere Breite als die ersten Kanten haben, um zwischen den ersten und zweiten Kanten eine umlaufende Stufe (37) zu bilden.

2. Befestigungselement nach Anspruch 1, das einen Abschnitt umfasst, der im Gebrauch der obere ist und mit einer Durchgangsbohrung (14) zur Befestigung an dem Fach ausgestattet ist.

3. Befestigungselement nach Anspruch 2, wobei der obere Abschnitt einen Rand umfasst, der eine erste Kante (30) und eine zweite Kante (32) aufweist, wobei die zweite Kante eine Breite aufweist, die größer ist als die der ersten Kante, um eine Stufe (36) zwischen der ersten und der zweiten Kante zu bilden, wobei die Stufe (36) des oberen Abschnitts so konfiguriert ist, dass sie an das Profil des Hohlraums des Regals anstößt.

4. Befestigungselement (100) nach Anspruch 1, umfassend einen Abschnitt, der im Gebrauch der obere ist und einen konkaven Rand mit einer ersten Kante (132) und einer zweiten Kante (130) aufweist, wobei die zweite Kante eine größere Breite als die erste Kante aufweist, um eine Stufe (136) zwischen der ersten und der zweiten Kante zu bilden, und ein Hilfsstützelement (190) für das Regal, das an dem Fach befestigbar ist,
eine Stufe (192, 194) aufweist, die zu der des oberen Abschnitts komplementär ist, und
durch Formschluss zwischen den jeweiligen Stufen mit dem oberen Abschnitt gekoppelt werden kann.

5. Befestigungselement nach Anspruch 3 oder 4, mit zwei parallelen und beabstandeten Segmenten (16), wobei das flexible Element zwischen den beiden Segmenten angeordnet ist, aus diesen herausragt und parallel zu diesen verläuft, wobei jedes parallele Segment eine äußerste Kante aufweist, an der sich die erste und die zweite Kante befinden.

6. Befestigungselement nach Anspruch 3 oder 4 oder 5, wobei die erste und zweite Kante die Umfangsstufe (37) für das Befestigungselement bilden, wobei die Umfangsstufe in einer Ebene liegt, aus der der Anschlagzahn herausragt.

7. Befestigungselement nach Anspruch 3 oder 4 oder 5 oder 6, wobei die zweiten Kanten eine umlaufende oder perimetrische Lippe bilden, deren Breite größer ist als die des Profils der Aussparung.

8. Befestigungselement nach Anspruch 7, wobei die umlaufende oder perimetrische Lippe auf einer Ebene liegt, aus der der Anschlagzahn (22) herausragt.

9. Befestigungselement nach einem der Ansprüche 2 bis 8, mit zwei Querschnitten, die, in jeweiligen parallelen und versetzten Ebenen betrachtet, unterschiedliche Breiten aufweisen, wobei die gegenüberliegenden Kanten eines Querschnitts die ersten Kanten und die gegenüberliegenden Kanten des anderen Querschnitts die zweiten Kanten integrieren.

10. Befestigungselement nach Anspruch 5, umfassend ein flaches Element (240), das mit dem Ende der beiden parallelen Segmente, das dem oberen Abschnitt gegenüberliegt, einstückig ist, wobei sich das flache Element in einer Ebene erstreckt, die im Wesentlichen parallel zur Achse des Durchgangslochs ist.

11. Befestigungselement nach Anspruch 5, umfassend ein flaches Element, das integral mit dem Ende der beiden parallelen Segmente ausgebildet ist und sich innerhalb einer Ebene erstreckt, die im Wesentlichen orthogonal zur Längsachse der parallelen Segmente ist.

12. Befestigungselement nach einem der vorstehenden Ansprüche, wobei das flexible Element mit einem zweiten Zahn (24) versehen ist, der sich in entgegengesetzter Richtung zum oberen Abschnitt erstreckt und dazu ausgelegt ist, das Lösen des Anschlagzahns (22) zu erleichtern.

13. Bausatz von Komponenten, umfassend
- einem Regal, das an der Innenfläche eines Fachs eines Möbelstücks arretierbar ist, wobei eine Seitenfläche des Regals mit einer Aussparung (52) versehen ist, die
- im Gebrauch - vertikal ist und
umfasst:
eine nach unten gerichtete Öffnung und
ein unteres Widerlager (54) an der nach unten gerichteten Öffnung; und
- ein Befestigungselement gemäß einem der vorhergehenden Ansprüche.

14. Montageverfahren für ein Regal und ein Befestigungselement gemäß einem der vorstehenden Ansprüche, wobei das Befestigungselement durch die nach unten gerichtete Öffnung in den Hohlraum eingeführt wird, wobei der Anschlagzahn so positioniert wird, dass er mit einer Schnappwirkung in das Widerlager eingreift.

## Revendications

1. Élément de fixation (10 ; 100 ; 200) pour fixer une étagère (M) à la surface interne d'un compartiment d'un meuble,
dans lequel une surface latérale de l'étagère est équipée d'une cavité (52) qui est, en utilisation, verticale et comprend:
une ouverture orientée vers le bas, et
une butée inférieure (54) au niveau de l'ouverture orientée vers le bas;
l'élément de fixation comprenant:
un élément flexible (20) s'étendant en porte-à-faux et équipé, à son extrémité libre, d'une dent d'arrêt (22),
l'élément de fixation étant configuré pour pouvoir être inséré à l'intérieur de la cavité à travers ladite ouverture orientée vers le bas de manière à ce que la dent d'arrêt (22) s'engage dans ladite butée (54) pour empêcher un soulèvement de l'étagère par rapport à ladite surface interne,
**caractérisé en ce qu'**il comprend
sur ses côtés
des premiers bords latéraux (30) sensiblement complémentaires des bords de ladite ouverture latérale de l'étagère et
des seconds bords latéraux (32) ayant une largeur supérieure à celle des premiers bords pour former un gradin périphérique (37) entre les premiers et seconds bords.

2. Élément de fixation selon la revendication 1, comprenant une partie qui est, en utilisation, la partie supérieure et qui est équipée d'un trou traversant (14) pour la fixation au compartiment.

3. Élément de fixation selon la revendication 2, dans lequel la partie supérieure comprend une marge comprenant un premier bord (30) et un deuxième bord (32), le deuxième bord ayant une largeur supérieure à celle du premier bord pour former un gradin (36) entre le premier et le deuxième bord,
dans lequel ledit gradin (36) de la partie supérieure est configuré pour venir en butée contre le profil de la cavité de l'étagère.

4. Élément de fixation (100) selon la revendication 1, comprenant
une partie étant, en utilisation, la partie supérieure et présentant une marge concave comprenant un premier bord (132) et un deuxième bord (130), le deuxième bord ayant une largeur supérieure à celle du premier bord afin de former un gradin (136) entre le premier et le deuxième bord, et
un élément de support auxiliaire (190) pour l'étagère qui
peut être fixé au compartiment,
comprend un gradin (192, 194) complémentaire de celui de la partie supérieure et peut être couplé à la partie supérieure par couplage de forme entre les gradins respectifs.

5. Élément de fixation selon la revendication 3 ou 4, comprenant deux segments parallèles et espacés (16),
l'élément flexible étant placé entre les deux segments, faisant saillie à partir de ceux-ci et étant parallèle à ceux-ci,
chaque segment parallèle ayant un bord extérieur sur lequel se trouvent lesdits premier et deuxième bords.

6. Élément de fixation selon la revendication 3 ou 4 ou 5, dans lequel les premier et deuxième bords forment le gradin périphérique (37) pour l'élément de fixation, le gradin périphérique se trouvant dans un plan à partir duquel la dent d'arrêt fait saillie.

7. Élément de fixation selon la revendication 3, 4, 5 ou 6, dans lequel les seconds bords définissent une lèvre périphérique ou périmétrale dont la largeur est supérieure à celle du profil de la cavité.

8. Élément de fixation selon la revendication 7, dans lequel la lèvre périphérique ou périmétrique se trouve sur un plan à partir duquel la dent d'arrêt (22) fait saillie.

9. Élément de fixation selon l'une quelconque des revendications 2 à 8, comprenant deux sections transversales qui, vues dans des plans parallèles et décalés respectifs, ont des largeurs différentes, les bords opposés d'une section transversale intégrant les premiers bords et les bords opposés de l'autre section transversale intégrant les seconds bords.

10. Élément de fixation selon la revendication 5, comprenant un élément plat (240) qui est solidaire de l'extrémité des deux segments parallèles opposée à la partie 30 supérieure, l'élément plat s'étendant dans un plan sensiblement parallèle à l'axe du trou traversant.

11. Élément de fixation selon la revendication 5, comprenant un élément plat qui est solidaire de l'extrémité des deux segments parallèles et s'étend dans un plan sensiblement orthogonal à l'axe de la longueur des segments parallèles.

12. Élément de fixation selon l'une quelconque des revendications précédentes, dans lequel l'élément flexible est équipé d'une deuxième dent (24) qui s'étend dans la direction opposée à la partie supérieure et qui est adaptée pour faciliter le dégagement de la dent d'arrêt (22).

13. Kit de composants comprenant
- une étagère pouvant être bloquée sur la surface intérieure d'un compartiment d'un meuble,
dans lequel une surface latérale de l'étagère est équipée d'une cavité (52) qui est - en utilisation - verticale, et
comprend:
une ouverture orientée vers le bas, et
une butée inférieure (54) au niveau de l'ouverture orientée vers le bas; et
un élément de fixation selon l'une quelconque des revendications précédentes.

14. Procédé d'assemblage d'une étagère et d'un élément de fixation selon l'une des revendications précédentes, dans lequel l'élément de fixation est inséré à l'intérieur de la cavité à travers ladite ouverture orientée vers le bas en positionnant la dent d'arrêt de manière à ce qu'elle s'engage par encliquetage avec ladite butée.
